(19)

Europäisches Patentamt
European Patent Office
Office européen des brevets

(11) **EP 3 993 092 A1**

(12) **EUROPEAN PATENT APPLICATION**

(43) Date of publication:
**04.05.2022 Bulletin 2022/18**

(21) Application number: **20213402.9**

(22) Date of filing: **11.12.2020**

(51) International Patent Classification (IPC):
**H01M 4/131** (2010.01)    **H01M 4/134** (2010.01)
**H01M 4/36** (2006.01)    **H01M 4/38** (2006.01)
**H01M 4/48** (2010.01)    **H01M 4/485** (2010.01)
**H01M 4/62** (2006.01)    **H01M 10/0525** (2010.01)
**H01M 4/02** (2006.01)

(52) Cooperative Patent Classification (CPC):
**H01M 4/131; H01M 4/134; H01M 4/366;
H01M 4/386; H01M 4/483; H01M 4/485;
H01M 4/625; H01M 10/0525;** H01M 2004/021;
H01M 2004/027

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.10.2020 KR 20200143237**

(71) Applicant: **Tera Technos Co., Ltd.
Yuseong-gu
Daejeon 34015 (KR)**

(72) Inventors:
• **KIM, Sung Soo**
  **34070 Daejeon (KR)**
• **LEE, Jae Woo**
  **30152 Sejong-si (KR)**
• **PARK, Jin Gee**
  **42287 Daegu (KR)**

• **CHOI, Sun Ho**
  **30150 Sejong-si (KR)**
• **CHEON, Jung Hoon**
  **30153 Sejong-si (KR)**
• **SHIN, Hyung Cheol**
  **35271 Daejeon (KR)**
• **PARK, Seong Hee**
  **30100 Sejong-si (KR)**
• **KANG, Deok Yoon**
  **32740 Chungcheongnam-do (KR)**
• **JUNG, Chun Young**
  **34513 Daejeon (KR)**
• **KIM, Eun Hee**
  **30150 Sejong-si (KR)**

(74) Representative: **Herrmann, Uwe
Lorenz Seidler Gossel
Rechtsanwälte Patentanwälte
Partnerschaft mbB
Widenmayerstraße 23
80538 München (DE)**

(54) **NEGATIVE ELECTRODE MATERIAL FOR SECONDARY BATTERY**

(57)    Provided is a negative electrode material for a secondary battery. The negative electrode material for a secondary battery according to the present invention contains: a matrix containing a silicon oxide, a complex oxide of one or more doping elements selected from the group consisting of an alkali metal, an alkaline earth metal and a post-transition metal, and silicon, or a mixture thereof; and silicon nanoparticles dispersed and impregnated in the matrix, wherein the negative electrode material for a secondary battery satisfies the following Equation 1:

$$[\text{Equation 1}]$$

$$1 < WN(Si)/WN(ref)$$

wherein WN(ref) is a central wavenumber of a Raman peak of bulk single-crystal silicon, and WN(Si) is a central wavenumber of a Raman peak of nanoparticulate silicon contained in the negative electrode material.

EP 3 993 092 A1

Description

CROSS-REFERENCE TO RELATED APPLICATIONS

This application claims priority under 35 U.S.C. §119 to Korean Patent Application No. 10-2020-0143237, filed on October 30, 2020, in the Korean Intellectual Property Office, the disclosure of which is incorporated herein by reference in its entirety.

TECHNICAL FIELD

The following disclosure relates to a negative electrode material for a secondary battery, and in particular, to a negative electrode material for a secondary battery having improved capacity, initial efficiency, and cycle characteristics

BACKGROUND

A demand for a secondary battery having a long life, a high-energy density, and a high-power density has continuously increased in the field of various industries including electronics, electric/hybrid vehicles, aerospace/drones, etc.

A representative negative electrode material used commercially is graphite, but a theoretical maximum capacity of the graphite is only 372 mAh/g. Accordingly, in order to implement a secondary battery having a high-energy density, research to use chalcogen-based material such as sulfur (maximum capacity 1675 mAh/g), silicon-based material such as silicon (maximum capacity 4200 mAh/g) or a silicon oxide (maximum capacity 1500 mAh/g), a transition metal oxide, etc., as a negative electrode material for a secondary battery, has been continuously conducted. Among various materials, a silicon-based negative electrode material is receiving the most attention.

However, when the particulate silicon is used as a negative electrode material, as a charging and discharging cycle is repeated, battery characteristics are rapidly deteriorated because insulation, particle detachment, and contact resistance increase due to a large change in silicon volume, such that the function as a battery is already lost in less than 100 cycles, and in the case of the silicon oxide, lithium is lost due to irreversible products such as lithium silicate or a lithium oxide, and an initial charging and discharging efficiency is drastically decreased.

In order to solve the problem of such a silicon-based negative electrode material, a technology of converting silicon into a nano-sized form such as a wire and complexing the nano-sized silicon with a carbon material, or a technology of forming a complex oxide phase by doping a silicon oxide with a different metal, or pre-lithiation of silicon oxide has been proposed, but there is still a problem in that that commercialization is difficult due to poor initial charging and discharging efficiency, cycle characteristics, and high efficiency characteristics.

[Related Art Document]

[Patent Document]

(Patent Document 1) Korean Patent Laid-Open Publication No. 10-2020-0065514

(Patent Document 2) Korean Patent Laid-Open Publication No. 10-2015-0045336

SUMMARY

An embodiment of the present invention is directed to providing a silicon-based negative electrode material for a secondary battery having high battery capacity, an improved initial reversible efficiency, and stable cycle characteristics.

In one general aspect, a negative electrode material for a secondary battery contains: a matrix containing a silicon oxide, a complex oxide of one or more doping elements selected from the group consisting of an alkali metal, an alkaline earth metal and a post-transition metal, and silicon, or a mixture thereof; and silicon nanoparticles dispersed and impregnated in the matrix, wherein the negative electrode material for a secondary battery satisfies the following Equation 1:

[Equation 1]

$$1 < WN(Si)/WN(ref)$$

wherein WN(ref) is a central wavenumber of a Raman peak of bulk single-crystal silicon, and WN(Si) is a central wavenumber of a Raman peak of nanoparticulate silicon contained in the negative electrode material.

The difference between the WN(Si) and the WN(ref) may be 0.1 $cm^{-1}$ or more.

A full width at half maximum (FWHM) of the Raman peak of the nanoparticulate silicon contained in the negative electrode material may be greater than that that of the bulk single-crystal silicon.

The FWHM of the Raman peak of the nanoparticulate silicon contained in the negative electrode material may be 4 to 20 $cm^{-1}$.

A difference between a maximum value and a minimum value in a shift defined by the following Equation 2 may be 5 $cm^{-1}$ or less under the following mapping conditions during a two-dimensional mapping analysis based on a Raman signal of the silicon:

mapping conditions: excitation laser wavelength = 532 nm, laser power = 0.1 mW, irradiation time = 1 sec, focal length = 30 mm, grating = 1,800 grooves/mm, pixel resolution = 0.1 $cm^{-1}$, mapping size = 14 $\mu$m x 14 $\mu$m

[Equation 2]

$$Shift = WN^i(Si) - WN(ref)$$

wherein WN(ref) is the same as in Equation 1 above, and $WN^i(Si)$ is the central wavenumber of the Raman peak of the nanoparticulate silicon contained in the negative electrode material in one pixel, which is a unit analysis area, during the mapping analysis.

The silicon nanoparticles may have an average diameter of 2 to 30 nm.

An interface between the silicon nanoparticles and the matrix may be a coherent interface.

The matrix may further contain a complex oxide of one or more doping elements selected from the group consisting of an alkali metal and an alkaline earth metal, and silicon.

The doping element may be one or more selected from the group consisting of lithium (Li), sodium (Na), potassium (K), aluminum (Al), rubidium (Rb), cesium (Cs), beryllium (Be), magnesium (Mg), calcium (Ca), strontium (Sr), and barium (Ba).

The composite oxide may include a crystalline phase.

The negative electrode material may be a particulate having an average diameter of $10^0$ $\mu$m to $10^1$ $\mu$m.

The negative electrode material may further include a coating layer containing carbon.

In another general aspect, there is provided a negative electrode containing the negative electrode material for a secondary battery described above.

In another general aspect, there is provided a secondary battery including the negative electrode described above.

**BRIEF DESCRIPTION OF THE DRAWINGS**

FIG. 1 is a diagram illustrating an EDS line profile of Mg in a cross section of a negative electrode material prepared according to an exemplary embodiment of the present invention.

FIG. 2 is a diagram illustrating a result obtained by measuring a Raman spectrum of the negative electrode material prepared according to an exemplary embodiment of the present invention.

FIG. 3 is a diagram illustrating a result of a two-dimensional mapping based on a Raman signal of silicon in the negative electrode material prepared according to an exemplary embodiment of the present invention.

FIG. 4 is a diagram illustrating a result obtained by measuring strength and modulus of elasticityof the negative electrode material prepared according to an exemplary embodiment of the present invention.

FIG. 5 is a graph illustrating a result obtained by measuring a battery capacity according to a charging and discharging cycle of a half cell having a negative electrode containing the negative electrode material prepared according to an exemplary embodiment of the present invention.

FIG. 6 is a high-magnification transmission electron microscope photograph obtained by observing the negative electrode material prepared according to an exemplary embodiment of the present invention.

FIG. 7 is a high-magnification transmission electron microscope photograph and a selected area diffraction pattern (SADP) obtained by observing a matrix in the negative electrode material prepared according to an exemplary embodiment of the present invention.

FIG. 8 is a scanning electron microscope photograph obtained by observing a cross-section and thickness of the negative electrode before lithiation and a cross-section and thickness of the negative electrode after lithiation, in the negative electrode containing the negative electrode material prepared according to an exemplary embodiment of the present invention.

FIG. 9 is a diagram illustrating a result obtained by measuring particle size distribution of a negative electrode material powder prepared according to an exemplary embodiment of the present invention.

FIG. 10 is a dQ/dV graph of the half cell having the negative electrode containing the negative electrode material prepared according to an exemplary embodiment of the present invention.

FIG. 11 is a diagram illustrating a selected area diffraction pattern (SADP) in a charged state of the negative electrode material prepared according to an exemplary embodiment of the present invention.

## DETAILED DESCRIPTION OF EMBODIMENTS

Hereinafter, a negative electrode material for a secondary battery according to the present invention will be described in detail with reference to the accompanying drawings. The drawings to be provided below are provided by way of example so that the spirit of the present invention can be sufficiently transferred to those skilled in the art. Therefore, the present invention is not limited to the accompanying drawings provided below, but may be modified in many different forms. In addition, the accompanying drawings suggested below will be exaggerated in order to clear the spirit and scope of the present invention. Technical terms and scientific terms used in the present specification have the general meaning understood by those skilled in the art to which the present invention pertains unless otherwise defined, and a description for the known function and configuration unnecessarily obscuring the gist of the present invention will be omitted in the following description and the accompanying drawings.

In addition, singular forms used in the detailed description and the claims are intended to include the plural forms unless otherwise indicated in context.

The terms "first", "second", etc. in the present detailed description and the claims are used for the purpose of distinguishing one component from another, rather than in a limiting sense.

The term "include", "have", etc. in the detailed description and the claims, means that there is a feature or component described in the detailed description, and does not preclude the possibility that one or more other features or components will be added, unless specifically limited.

Throughout the detailed description and the appended claims, when elements such as films (layers), regions, or components are referred to as being "on" or "above" another elements, it may be directly in contact with another components or may have another films (layers), another regions, another components interposed therebetween.

The applicant of the present invention has found that in a silicon-based negative electrode material in which silicon and a silicon-based oxide are combined, mechanical properties and electrochemical properties of the negative electrode material are significantly affected by residual stress of silicon contained in the negative electrode material. As a result of concentrated research based on these findings, the applicant of the present invention has found that when the silicon is dispersed as a nanoparticulate in a matrix based on a silicon oxide and has the residual compressive stress, the mechanical and electrochemical properties of the negative electrode material are remarkably improved, and the present invention has been completed.

Thus, the negative electrode material according to the present invention based on the above-described findings exhibits mechanical properties and electrochemical properties that cannot be obtained from a conventional silicon-based negative electrode material, due to a combination of silicon dispersed as a nanoparticulate and having residual compressive stress, and a matrix. Accordingly, the present invention includes various aspects based on the physical properties of the silicon-based negative electrode material according to the present invention.

In the present invention, the matrix may refer to a solid medium in which the nanoparticulate silicon is dispersed, and may refer to a material that forms a continuum phase compared to silicon nanoparticles, which is a dispersed phase, in the negative electrode material. In the present invention, the matrix may refer to material(s) other than metal silicon (Si) in the negative electrode material.

In the present invention, the nanoparticles may refer to particles of $10^0$ nanometers to $10^2$ nanometers, which is a size (diameter) usually defined as the nanoparticles, substantially 500 nm or less, and specifically, 200 nm or less, more specifically 100 nm or less, and still more specifically 50 nm or less in a diameter.

In the present invention, the negative electrode material for a secondary battery includes a negative electrode material for a lithium secondary battery, but is not limited thereto. The negative electrode material of the present invention may be used as an active material for the secondary battery such as a sodium battery, an aluminum battery, a magnesium battery, a calcium battery, and a zinc battery, and may also be used in other energy storage/generating devices in which conventional silicon-based materials are used, such as a super capacitor, a dye-sensitized solar cell, and a fuel cell.

A negative electrode material for a secondary battery according to an aspect (I) of the present invention containes: a matrix containing a silicon oxide, a complex oxide of one or more doping elements selected from the group consisting of an alkali metal, an alkaline earth metal and a post-transition metal, and silicon, or a mixture thereof; and silicon nanoparticles dispersed and impregnated in the matrix, wherein the negative electrode material for a secondary battery satisfies the following Equation 1:

$$[\text{Equation 1}]$$

$$1 < WN(Si)/WN(ref)$$

wherein WN(ref) is a central wavenumber of a Raman peak of bulk single-crystal silicon, and WN(Si) is a central wavenumber of a Raman peak of the nanoparticulate silicon contained in the negative electrode material.

In Equation 1, a ratio of the central wavenumber of the Raman peak of the nanoparticulate silicon contained in the negative electrode material to the central wavenumber of the Raman peak of the bulk single-crystal silicon is a parameter indicating the type of stress (residual stress) and the magnitude of the residual stress remaining in the silicon nanoparticles dispersed and impregnated in the matrix.

In Equation 1, the term bulk single-crystal silicon should be interpreted as referring to silicon of a size substantially exhibiting the physical properties of bulk single-crystal silicon. In terms of providing a clear comparison criteria and ensuring the ease of purchase, the bulk single-crystal silicon may refer to a single-crystal silicon wafer having a thickness of a sub-mm-order level, for example, a thickness of 0.4 to 0.7 mm.

In Equation 1, WN(Si)/WN(ref) exceeds 1 means that the central wavenumber of the Raman peak of the nanoparticulate silicon(the silicon nanoparticles) contained in the negative electrode material moves to a longer wavenumber (to a shorter wavelength based on the wavelength of Raman scattered light), compared to the central wavenumber of the Raman peak of the bulk single-crystal silicon and means that the silicon nanoparticles have residual compressive stress.

In Equation 1, the Raman peak of the silicon in each of the bulk single-crystal silicon and the nanoparticulate silicon may refer to a Raman peak located in a region of 500 to 540 cm$^{-1}$, specifically a region of 510 to 530 cm$^{-1}$, and more specifically a region of 515 to 528 cm$^{-1}$ in the Raman spectrum of the silicon. The central wavenumber of the peak, that is, the wavenumber corresponding to the center of the peak, may refer to a wavenumber having a maximum intensity value at the peak. In this case, when two or more Raman peaks exist in the Raman shift region described above, the peak having the largest intensity may correspond to the Raman peak of the silicon in Equation 1, and when two or more Raman peaks overlap with each other to represent a bimodal shape, the wavenumber having a maximum intensity value in a peak having a greater intensity in the bimodal may correspond to the central wavenumber of the peak.

A difference between the WN(Si) and the WN(ref) (WN(Si)-WN(ref)) is a parameter that directly indicates the magnitude of residual compressive stress of silicon nanoparticles. Specifically, the difference between the WN(Si) and the WN(ref) may be 0.1 cm$^{-1}$ or more, 0.2 cm$^{-1}$ or more, 0.3cm$^{-1}$ or more, 0.4 cm$^{-1}$ or more, 0.5 cm$^{-1}$ or more, 0.6 cm$^{-1}$ or more, 0.7 cm$^{-1}$ or more, 0.8 cm$^{-1}$ or more, 0.9 cm$^{-1}$ or more, 1.0 cm$^{-1}$ or more, 1.1 cm$^{-1}$ or more, 1.2 cm$^{-1}$ or more, 1.3 cm$^{-1}$ or more, 1.4 cm$^{-1}$ or more, 1.5 cm$^{-1}$ or more, 1.6 cm$^{-1}$ or more, 1.7 cm$^{-1}$ or more, 1.8 cm$^{-1}$ or more, 1.9 cm$^{-1}$ or more, 2.0 cm$^{-1}$ or more, 2.1 cm$^{-1}$ or more, 2.2 cm$^{-1}$ or more, 2.3 cm$^{-1}$ or more, 2.4 cm$^{-1}$ or more, 2.5 cm$^{-1}$ or more, 2.6 cm$^{-1}$ or more, 2.7 cm$^{-1}$ or more, 2.8 cm$^{-1}$ or more, 2.9 cm$^{-1}$ or more, 3.0 cm$^{-1}$ or more, 3.1 cm$^{-1}$ or more, 3.2 cm$^{-1}$ or more, 3.3 cm$^{-1}$ or more, 3.4 cm$^{-1}$ or more, 3.5 cm$^{-1}$ or more, 3.6 cm$^{-1}$ or more, 3.7 cm$^{-1}$ or more, 3.8 cm$^{-1}$ or more, 3.9 cm$^{-1}$ or more, or 4.0 cm$^{-1}$ or more, substantially 6.0 cm$^{-1}$ or less, and more substantially 5.5 cm$^{-1}$ or less.

The FWHM of the Raman peak of the nanoparticulate silicon contained in the negative electrode material may be greater than that of the bulk single-crystal silicon, either together with or independently of the difference between the central wavelengths of the Raman peaks of the bulk single-crystal silicon described above and the nanoparticulate silicon contained in the negative electrode material. The FWHM value of the Raman peak of the silicon nanoparticles contained in the negative electrode material is larger than that of the bulk single-crystal silicon, which may be due to a structure in which the silicon contained in the negative electrode material is dispersed and impregnated in a matrix as a form of an ultrafine particulate. Specifically, the FWHM of the Raman peak of the nanoparticulate silicon contained in the negative electrode material may be 4 to 20 cm$^{-1}$, 6 to 20 cm$^{-1}$, 6 to 18 cm$^{-1}$, 6 to 16 cm$^{-1}$, 8 to 20 cm$^{-1}$, 8 to 18 cm$^{-1}$, 8 to 16 cm$^{-1}$, 10 to 20 cm$^{-1}$, 10 to 18 cm$^{-1}$, or 10 to 16 cm$^{-1}$, but is not necessarily limited thereto.

In the nanoparticulate silicon contained in the negative electrode material, based on the central wavenumber (0 cm$^{-1}$) of the Raman peak of the silicon (nanoparticulate slicon), an intensity (I1) at the +20 cm$^{-1}$ position (wavenumber) based on the Raman spectrum and an intensity (12) at the -20 cm$^{-1}$ position (wavenumber) based on the Raman spectrum may be significantly different from each other, and the intensity (I2) at the -20 cm$^{-1}$ position (wavenumber) may be greater than the intensity (I1) at the +20 cm$^{-1}$ position (wavenumber), either together with or independently of the difference between the central wavelengths of the Raman peaks between the bulk single-crystal silicon described above and the silicon nanoparticles contained in the negative electrode material. In this case, significantly different may mean that a ratio of I2/I1 is 1.20 or more. This asymmetry of the Raman peak of the silicon (long tail in the short wavenumber direction) may also be due to a structure in which the silicon nanoparticles having residual compressive stress are dispersed and impregnated in the matrix.

In addition, the difference between the maximum value and the minimum value of the shift defined by the following Equation 2 may be 5 cm$^{-1}$ or less during a two-dimensional mapping analysis of the negative electrode material based on the Raman signal of the silicon.

$$[\text{Equation 2}]$$

$$\text{Shift} = \text{WN}^i(\text{Si}) - \text{WN}(\text{ref})$$

wherein WN(ref) is the same as in Equation 1 above, and WN$^i$(Si) is the central wavenumber of the Raman peak of the nanoparticulate silicon contained in the negative electrode material in one pixel, which is a unit analysis area, during the mapping analysis. In this case, in the two-dimensional Raman map obtained by the two-dimensional mapping analysis, the shift in Equation 2 may be calculated in each pixel only for pixels in which the Raman signal of the silicon is detected, and the maximum and minimum values may mean the minimum and maximum values among shifts calculated according to Equation 2.

Based on the two-dimensional Raman map of silicon obtained through two-dimensional mapping analysis of the negative electrode material based on the Raman signal of the silicon, the difference between the maximum and minimum values of a movement value (shift) of the central wavenumber of the silicon peak compared to the central wavenumber of the bulk single-crystal silicon according to Equation 2 is an index indicating the uniformity of residual compressive stress of silicon nanoparticles dispersed and impregnated in the negative electrode material. The difference between the maximum and minimum values of the shift based on the two-dimensional Raman map may be 5.0 cm$^{-1}$ or less, 4.5 cm$^{-1}$ or less, 4.0 cm$^{-1}$ or less, 3.5 cm$^{-1}$ or less, 3.0 cm$^{-1}$ or less, 2.5 cm$^{-1}$ or less, or 1.0 cm$^{-1}$ or less, and substantially, the difference between the maximum value and the minimum value may be 0.1 cm$^{-1}$ or more, and more substantially 0.5 cm$^{-1}$ or more. This difference between the maximum and minimum values means that the most of the silicon nanoparticles contained in the negative electrode material, substantially all of the silicon nanoparticles, have residual compressive stress, and further, means that the most of the silicon nanoparticles contained in the negative electrode material, substantially all of the silicon nanoparticles, have substantially the same magnitude of residual compressive stress.

Experimentally, the Raman spectrum of the silicon contained in the negative electrode material may be measured under the conditions of: room temperature (20 to 25°C), atmospheric pressure, excitation laser wavelength of 532 nm, laser power of 0.5 mW, spectrometer resolution of 1 cm$^{-1}$, negative electrode material of 1 g, and detector exposure time of 15 s.

Experimentally, the two-dimensional Raman mapping of the negative electrode material using the Raman signal of the silicon may be measured under the mapping of the conditions of: excitation laser wavelength = 532 nm, laser power = 0.1 mW, detector exposure time (exposure time per unit analysis area) = 1 sec, focal length = 30 mm, grating = 1,800 grooves/mm, pixel resolution = 1 cm$^{-1}$, mapping size = 14 μm x 14 μm, and may be measured at room temperature under atmospheric pressure.

A negative electrode material for a secondary battery according to an aspect (II) of the present invention containes: a matrix containing a silicon oxide, a complex oxide of silicon and one or more doping elements selected from the group consisting of an alkali metal, an alkaline earth metal and a post-transition metal, or a mixture thereof; and silicon nanoparticles dispersed and impregnated in the matrix, and may have a hardness of 4.0 GPa or more by a nano-indentation test and an modulus of elasticity(Young's modulus) of 40 MPa or more. Hereinafter, regarding the mechanical properties of the negative electrode material for the secondary battery, all physical properties are those measured at room temperature (20 to 25°C), unless specifically limited to the temperature.

The nano-indentation test may be measured according to ASTM E2546, ISO 14577-1 E, ISO 14577-2 E, ISO 14577-3 E, and modulus of elasticity(E), as known, may be calculated according to Equation $E = E^* \cdot (1-v^2)$. Here, E* is the modulus of elasticity of an indenter, and $v$ is the Poisson's ratio of a Berkovich indenter, which was assumed to be 0.3. The nano-indentation test using the Berkovich indenter may be performed under the conditions of: a maximum load of 50 mN and a load application speed of 100 mN/min. The strength and elastic modulus measured by the nano-indentation test may be at least an average value of physical property values obtained by performing the nano-indentation test in a matrix form of 5 x 5 to 25 x 25, with a spaced distance between the indentation marks of at least 10 um or more based on the indentation marks by the indenter. In this case, the negative electrode material sample subjected to the nano-indentation test may be prepared by mounting and polishing a plate-like bulk negative electrode material.

Specifically, a strength (indentation strength) of the negative electrode material for a secondary battery by the nano-indentation test may be 4.0 GPa or more, 4.5 GPa or more, 5.0 GPa or more, 5.5 GPa or more, 6.0 GPa or more, 6.5 GPa or more, 7.0 GPa or more, 7.5 GPa or more, 8.0 GPa or more, 8.5 GPa or more, 9.0 GPa or more, 9.5 GPa or more, 10.0 GPa or more, 10.2 GPa or more, 10.4GPa or more, 10.6GPa or more, 10.8GPa or more, 11.0 GPa or more, 11.2 GPa or more, 11.4 GPa or more, 11.6 GPa or more, 11.8 GPa or more, 12.0 GPa or more, 12.2 GPa or more, 12.4 GPa or more, 12.6 GPa or more, 12.8 GPa or more, or 13.0 GPa or more, substantially 25.0 GPa or less, and more substantially 20.0 GPa or less. In addition, an elastic modulus(modulus of elasticity) of the negative electrode material for a secondary battery by the nano-indentation test may be 40 MPa or more, 45 MPa or more, 50 MPa or more, 55 MPa or more, 60 MPa or more, 65 MPa or more, 70 MPa or more, 75 MPa or more, 80 MPa or more, 85 MPa or more, 90 MPa or more, 92 MPa or more, 94 MPa or more, 96 MPa or more, 98 MPa or more, 100 MPa or more, 102 MPa or more, 104 MPa or more, 106 MPa or more, 108 MPa or more, 110 MPa or more, 112 MPa or more, 114 MPa or more, 116 MPa or more, 118 MPa or more, or 120 MPa or more, substantially 250 MPa or less, and more substantially 200 MPa or less.

The mechanical properties of the negative electrode material described above, based on the nano-indentation test, are physical property values that may be realized by the residual stress existing in the negative electrode material, including residual compressive stress of the nanoparticulate silicon.

The negative electrode material having high strength and excellent elasticity means that during an electrode manufacturing process ranging from preparation of negative electrode material slurry-application of slurry on a current collector and drying-rolling (calendering), which has been established in the conventional secondary battery field, the particulate negative electrode material is not physically damaged and the damage of a pore structure of the electrode (anode electrode) is also prevented, such that a stable and homogeneous contact with an electrolyte may be ensured according to the design.

A negative electrode material for a secondary battery according to another aspect (III) of the present invention is a particulate material, containing a matrix containing a silicon oxide, a complex oxide of one or more doping elements selected from the group consisting of an alkali metal, an alkaline earth metal and a post-transition metal, and silicon, or a mixture thereof; and silicon nanoparticles dispersed and impregnated in the matrix, wherein the negative electrode material for a secondary battery may have a compressive strength (St) of 100 MPa or more. The compressive strength

$$St = \frac{2P}{\pi dL},$$

(St) of the particles, as known, may be calculated according to Equation         wherein P is an applied force, d is a diameter of the particle, L is a distance, and may be measured using a micro-compression tester (e.g., MCT -W500-E, Shimadzu).

Specifically, the particle compressive strength of the particulate negative electrode material for a secondary battery may be 100 MPa or more, 105 MPa or more, 110 MPa or more, 115 MPa or more, 120 MPa or more, 125 MPa or more, 130 MPa or more, 135 MPa or more, 140 MPa or more, 145 MPa or more, 150 MPa or more, 155 MPa or more, or 160 MPa or more, substantially 250 MPa or less, and more substantially 200 MPa or less.

The mechanical properties of the negative electrode material described above are physical property values that may be realized by the residual stress existing in the negative electrode material, including residual compressive stress of the nanoparticulate silicon. Furthermore, a mechanical strength and elasticity may be further improved by forming a stress field in the matrix surrounding the silicon nanoparticles having residual compressive stress due to the coherent interface between the silicon nanoparticles and the matrix.

A negative electrode material for a secondary battery according to another aspect (IV) of the present invention contains: a matrix containing silicon (Si), one or more doping elements (D) selected from the group of an alkali metal, alkaline earth metal and a post-transition metal based on elemental components, and oxygen (O); and silicon nanoparticles dispersed and impregnated in the matrix, wherein the negative electrode material for a secondary battery has a composition uniformity that satisfies the following Equation 3:

[Equation 3]

$$B/A \leq 0.30$$

wherein A is an average value obtained by averaging a content (wt%) of doping elements measured at any 100 points based on a cross section across the center of the negative electrode material, and B is a standard deviation of the contents. Specifically, A may be an average content (wt%) of doping elements calculated from any 100 points in a line profile of the doping element across the center of the cross section of the negative electrode material, and B may be a standard deviation of the contents.

More specifically, in Equation 3, B/A may be 0.30 or less, 0.25 or less, 0.20 or less, 0.15 or less, 0.14 or less, 0.13 or less, 0.12 or less, or 0.11 or less.

In Equation 3, B/A is a parameter representing composition uniformity of the negative electrode material based on the doping element (D), and the excellent composition uniformity of B/A that satisfies the above-described range allows the negative electrode material to exhibit uniform mechanical and electrochemical properties.

Experimentally, analysis of the content or linear composition of the doping element may be performed using an electron probe micro analyzer (EPMA) or an energy dispersive X-ray spectroscopy (EDS) provided in a transmission electron microscope or a scanning electron microscope, but is not limited thereto.

In the negative electrode material for a secondary battery that satisfies the above-described composition uniformity, the matrix based on the elemental component may contain one or more doping elements (D) selected from the group consisting of an alkali metal and an alkaline earth metal, silicon (Si), and oxygen (O), and the matrix based on the compound component may contain a silicon oxide and a complex oxide of silicon with a doping element. Thus, the composition uniformity of the doping element defined by Equation 3 may correspond to the composition uniformity of the composite oxide, but is not necessarily limited thereto.

A negative electrode material for a secondary battery according to another aspect (V) of the present invention contains: a matrix containing a silicon oxide, a complex oxide of silicon and one or more doping elements selected from the group consisting of an alkali metal, an alkaline earth metal, and a post-transition metal, or a mixture thereof; and silicon nanoparticles dispersed and impregnated in the matrix, wherein the negative electrode material for a secondary battery has a volume change within 20% when charged up to 0.005 V. In this case, the volume change (%) may be defined as [volume of negative electrode material after lithiation - volume of negative electrode material before lithiation] / volume of negative electrode material before lithiation*100. When the negative electrode material is charged up to 0.005 V, the volume change only within 20%, specifically within 19%, within 18%, within 17%, within 16%, or only within 15% means that a significantly smaller volume change occurs compared to the conventional silicon-based negative electrode material, and also means that the main problem of the conventional silicon-based negative electrode material is greatly solved.

The negative electrode material may be charged by a charging and discharging test according to the following charging and discharging cycle condition using a half cell including the negative electrode containing the negative electrode material, and a counter electrode which is metallic lithium foil, and may be charged up to 0.005 V in the charging and discharging cycle, specifically, a first charging and discharging cycle.

Charging and discharging cycle conditions: CC/CV, cut-off voltage 0.005 V~1.0 V, 0.5 C-rate

Hereinafter, unless otherwise limited and indicated, electrochemical properties of the negative electrode material (charging and discharging characteristics, discharge capacity, dQ/dV graph, etc.), including the volume change during lithiation described above, may be the electrochemical properties of the half cell including the negative electrode containing the negative electrode material, and the counter electrode which is metallic lithium foil, and may be the electrochemical properties of the half cell in which a formation process has been performed. The half cell is located on at least one surface of the negative electrode current collector and the current collector, and may be a cell including a negative electrode containing a negative electrode active material layer including a negative electrode material according to an exemplary embodiment of the present invention; a counter electrode which is a metallic lithium foil; a separator interposed between the negative electrode and the counter electrode; and an electrolyte in which $LiPF_6$ is dissolved at a concentration of 1M in a mixed solvent in which ethylene carbonate and diethyl carbonate are mixed in a volume ratio of 1:1, and electrochemical properties thereof may be measured at room temperature. The formation process may include a primary process in which the charging and discharging is performed under conditions of CC/CV, cut-off voltage of 0.005 V to 1.5 V, and 0.1 C-rate, and a secondary process in which the charging and discharging is performed under conditions of CC/CV, cut-off voltage of 0.005 V to 1.0 V, and 0.1 C-rate. However, the present invention cannot be limited to the conditions of the formation process of a test cell (half cell), and it is sufficient for a formation process commonly performed on a battery used to test the electrochemical properties of a conventional negative electrode material.

A negative electrode material for a secondary battery according to another aspect (VI) of the present invention contains: a matrix containing a silicon oxide, a complex oxide of silicon and one or more doping elements selected from the group consisting of an alkali metal, an alkaline earth metal, and a post-transition metal, or a mixture thereof; and silicon nanoparticles dispersed and impregnated in the matrix, wherein a lithium insertion peak corresponding to the $Li_{3.75}Si$ reaction exists in a dQ/dV graph obtained by the charging and discharging test according to the following charging and discharging cycle conditions using the half cell in which the counter electrode is metallic lithium foil, and the discharge capacity in the first charging and discharging cycle is 1,200 mAh/g or more.

Charging and discharging cycle conditions: CC/CV, Cut-off voltage 0.005 V~1.0 V, 0.5 C-rate

The dQ/dV graph may be a graph showing a relationship between a differential value dQ/dV obtained by differentiating a battery capacity (discharge capacity) (Q) in the first charging and discharging cycle by the potential (V) of a negative electrode with respect to the metallic lithium foil, of the half cell, and the potential V. In this case, the lithium insertion peak corresponding to the $Li_{3.75}Si$ reaction on the dQ/dV graph may refer to a peak located in a voltage range of 0.005 V to 0.100 V, specifically a voltage range of 0.005 V to 0.050 V, and more specifically a voltage range of 0.005 V to 0.040 V.

That is, a negative electrode material for a secondary battery according to another aspect (VI) of the present invention means that lithium insertion is made beyond $Li_{3.5}Si$ to $Li_{3.75}Si$. As lithium insertion is made up to $Li_{3.75}Si$, the capacity of the negative electrode material may be improved. As a practical example, during charging and discharging according to the above-described charging and discharging cycle conditions of the half cell subjected to the formation process, the discharge capacity (C1) in the first charging and discharging cycle may be 1200 mAh/g or more, 1250 mAh/g or more, 1300 mAh/g or more, 1350 mAh/g or more, 1400 mAh/g or more, 1450 mAh/g or more, or 1500 mAh/g or more, and substantially 2500 mAh/g or less.

A negative electrode material for a secondary battery according to another aspect (VII) of the present invention contains: a matrix containing a silicon oxide, a complex oxide of silicon and one or more doping elements selected from the group consisting of an alkali metal, an alkaline earth metal, and a post-transition metal, or a mixture thereof; and silicon nanoparticles dispersed and impregnated in the matrix, and in a charging and discharging test according to the following charging and discharging cycle condition using a half cell in which a counter electrode is a metallic lithium foil, the Equation 4 is satisfied.

Charging and discharging cycle conditions: CC/CV, cut-off voltage 0.005 V~1.0 V, 0.5 C-rate

[Equation 4]

$$95\% \leq C50/C1*100$$

wherein CI is a discharge capacity of a negative electrode material in the first charging and discharging cycle (mAh/g), and C50 is a discharge capacity of a negative electrode material in a 50th charging and discharging cycle.

Specifically, C50/C1*100 may be 95% or more, 96% or more, 97% or more, 98% or more, or 99% or more. The above-described cycle characteristics means that storage and release of lithium ions in the negative electrode material is substantially completely reversible, that no substantial capacity decrease (deterioration of the negative electrode material, a decrease in electrical contact of the negative electrode material in the negative electrode active material layer, formation of irreversible products, etc) occurs in a process of repetitive charging and discharging up to 50 times, and that the capacity retention rate is extremely excellent.

In an embodiment, C50 may be 1200 mAh/g or more, 1250 mAh/g or more, 1300 mAh/g or more, 1350 mAh/g or more, 1400 mAh/g or more, 1450 mAh/g or more, or 1500 mAh/g or more, and substantially 2500 mAh/g or less.

A negative electrode material for a secondary battery according to another aspect (VIII) of the present invention contains: a matrix containing a silicon oxide, a complex oxide of silicon and one or more doping elements selected from the group consisting of an alkali metal, an alkaline earth metal, and a post-transition metal, or a mixture thereof; and silicon nanoparticles dispersed and impregnated in the matrix and having residual compressive stress.

The residual compressive stress of the nanoparticulate silicon dispersed and impregnated in the matrix, and furthermore, the residual compressive stress of silicon, and the stress field formed in the matrix surrounding the silicon nanoparticles due to the coherent interface formed between the silicon nanoparticles and the matrix, are an aspect of the negative electrode material based on the Raman spectrum described above, another aspect of the negative electrode material based on mechanical properties, and another aspect of the negative electrode material based on electrochemical properties during lithiation, which may appear as physical properties of the negative electrode material or measurable parameters.

The negative electrode material according to the present invention may satisfy one or more aspects, two or more aspects, three or more aspects, four or more aspects, five or more aspects, six or more aspects, seven or more aspects, or all aspects of I to VIII among the above-described aspects (I to VIII).

Hereinafter, unless specifically limited to "one aspect according to the present invention" and described, the content mentioned later corresponds to each of all the aspects provided by the present invention.

In an embodiment, the negative electrode material may contain one or more doping elements selected from the group of silicon, oxygen, an alkali metal, an alkaline earth metals, and a post-transition metal based on elemental components. The silicon may include a silicon component in an elemental silicon state and a silicon component in an oxide state, wherein the silicon component in the oxide state may include an oxide state of silicon alone, a complex oxide state of silicon and a doping element, or both of them. The doping element may include a doping element component in an oxide state, wherein the doping element in an oxide state may include an oxide state of a doping element alone, a complex oxide state of silicon and a doping element, or both of them.

Based on the compound component, the negative electrode material may contain a silicon oxide, a complex oxide of a doped element and silicon, or a mixture thereof, and may also contain elemental silicon (Si). The silicon oxide may include $SiO_x$, wherein x may be a real number of 0.1 to 2, the complex oxide may include $D_lSi_mO_n$, wherein D may be a doping element, l may be a real number of 1 to 6, m may be a real number of 0.5 to 2, n may be a real number that satisfies charge neutrality depending on the oxidation number of each of D and Si, and l and m. For example, if D is Mg, the composite oxide may include one or more oxides selected from $MgSiO_3$ and $Mg_2SiO_4$, but in the present invention, D and the composite oxide are not necessarily limited to an oxide between Mg and Mg-Si.

Based on a fine structure, the negative electrode material may contain a matrix containing a silicon oxide, a complex oxide of silicon and one or more doping elements selected from the group consisting of an alkali metal and an alkaline earth metal, or a mixture thereof; and silicon nanoparticles which is a dispersed phase. The silicon nanoparticles, which is the dispersed phase, may be uniformly dispersed and impregnated in the matrix.

In an embodiment, the silicon nanoparticles may be a crystalline phase, an amorphous phase, or a composite phase in which both the crystalline phase and the amorphous phase are present, and may be substantially crystalline.

In an embodiment, the matrix may be a crystalline phase, an amorphous phase, or a composite phase in which both the crystalline phase and the amorphous phase are present. In detail, the matrix may be a crystalline phase or a composite phase in which both the crystalline phase and the amorphous phase are present. Specifically, the matrix may include a silicon oxide in which an amorphous phase alone is present, or a crystalline phase alone is present, or both the amorphous phase and the crystalline phase are present, and a crystalline complete oxide.

The interface between the silicon nanoparticles and the matrix may include a coherent interface, an incoherent interface, and a semi-coherent interface, may substantially include a coherent interface or a semi-coherent interface, and may more substantially include a coherent interface. As known, the coherent interface is an interface in which the lattice of two materials forming the interface maintains lattice continuity at the interface, and the semi-coherent interface is an interface in which a portion of lattice mismatch is partially present, but the portion of lattice mismatch can be regarded as a defect such as a dislocation. Thus, in the negative electrode material having the coherent or semi-coherent interface between the silicon nanoparticles and the matrix, the matrix region in contact with the silicon nanoparticles may be crystalline, and specifically, may be a crystalline silicon oxide, a crystalline composite oxide, or a mixture thereof. Experimentally, the interface structure of the coherent interface, the incoherent interface, and the semi-coherent interface may be determined through observation with a high-relosution transmission electron microscope, etc., which is well known to those skilled in the art.

In an embodiment, an average diameter of the silicon nanoparticles may be $10^0$ nanometers to $10^1$ nanometers, and specifically 1 to 50 nm, 2 to 40 nm, 2 to 35 nm, 2 nm to 30 nm, 2 nm to 20 nm, or 2 nm to 15 nm, but is not limited thereto. However, the silicon nanoparticles at the level of 30 nm or less form a coherent interface with the matrix as a whole, and may be advantageous because stresses are formed in a wider area of the matrix due to compressive stress remaining in the silicon nanoparticles. Experimentally, the average diameter of the silicon nanoparticles may be calculated by measuring the size of the silicon nanoparticles in the negative electrode material through an image observed with a transmission electron microscope, and averaging the sizes measured for 10 or more, 20 or more, or 30 or more silicon nanoparticles.

In an embodiment, the doping element may be one or more selected from the group consisting of lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi). Thus, the composite oxide may be an oxide consisting of silicon, and one or more elements selected from the group consisting of lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi). Due to a synergy effect between the composite oxide and the silicon nanoparticles having residual compressive stress, the negative electrode material may have more improved mechanical properties and electrochemical properties. In order to be advantageous in forming the coherent interface with the silicon nanoparticles, the doping element may be one or more elements selected from the group consisting of an alkali metal and alkaline earth metal group, specifically, one or more elements selected from the group consisting of lithium (Li), sodium (Na), potassium (K), rubidium (Rb), cesium (Cs), beryllium (Be), magnesium (Mg), calcium (Ca), strontium (Sr) and barium (Ba), and more advantageously, one or more elements selected from the group consisting of an alkaline earth metal, specifically magnesium (Mg), calcium (Ca), strontium (Sr), and barium (Ba). Most advantageously, in terms of easy of cohenrent interface formation and synergistic effect with the silicon nanoparticles having residual compressive stress, the doping element may include magnesium. As described above, the doping element may be contained in the negative electrode material in the form of the complex oxide with silicon and/or in the form of the oxide of the doping element, and may be mainly contained in the negative electrode material in the form of the composite oxide. Specifically, when the matrix contains the doping element in the form of the complex oxide with silicon, the complex oxide may include a crystalline phase, and more substantially, the complex oxide may be a crystalline phase. Thus, the matrix may contain a crystalline composite oxide.

In an embodiment, the silicon oxide contained in the matrix may include $SiO_x$ (wherein x may be a real number of 0.1 to 2, and more specifically 0.5 to 2), and may include a first silicon oxide and a second silicon oxide having different x. As a practical example, the silicon oxide contained in the matrix may include the first silicon oxide of $SiO_{x1}$ (wherein x1 may be a real number of 1.8 to 2) and the second silicon oxide of $SiO_{x2}$ (wherein x2 may be a real number of 0.8 to 1.2). The silicon oxide contained in the matrix may be a crystalline phase, an amorphous phase, a composite phase in which both a crystalline phase and an amorphous phase are present, and may be substantially an amorphous phase.

In an embodiment, the negative electrode material may contain 15 to 50% by weight of the nanoparticulate silicon and the balance of the matrix.

In an embodiment, the matrix in the negative electrode material may contain both the silicon oxide and the composite oxide, and in the matrix, A/B may be 2 to 50, 2 to 40, 2 to 30, or 2 to 20 in which A is a part by weight of the composite oxide based on 100 parts by weight of the silicon oxide, and B is a wt% concentration of the doping element based on the weight of the negative electrode material.

In an embodiment, the negative electrode material may be a particulate material. The particulate negative electrode material may have a particle size commonly required in the use of a secondary battery, for example, an average diameter of $10^0$ $\mu$m to $10^1$ $\mu$m, specifically, an average diameter of 5 $\mu$m to 30 $\mu$m, but the average diameter is not limited thereto.

In an embodiment, the negative electrode material may further include a coating layer containing carbon, and specifically a surface coating layer coated on the surface of the negative electrode material. It is advantageous because the electrical properties of the negative electrode material may be improved by such a surface coating layer. It is sufficient if the thickness of the coating layer is 2 to 30 nm, but the thickness is not necessarily limited thereto.

In an embodiment, the negative electrode material contains the silicon nanoparticles having residual compressive stress, and may have an alloying ratio of (more than) 3.5 to 3.75 moles, and specifically 3.6 to 3.75 moles of lithium per 1 mole of silicon, when the negative electrode material was electrochemically alloyed with lithium (lithiation). Such a high alloying ratio is very advantageous for high capacity. In addition, in an embodiment, the negative electrode material may have high initial charging and discharging efficiency and capacity retention rate.

The present invention includes a negative electrode containing the negative electrode material described above. The negative electrode may be a negative electrode of a secondary battery, specifically, a lithium secondary battery. The negative electrode may include a current collector; and a negative electrode active material layer disposed on at least one surface of the current collector and containing the negative electrode material described above, and if necessary, the negative electrode active material layer may further include a binder and a conductive material commonly used for the negative electrode material and the negative electrode of the secondary battery.

The present invention includes a secondary battery including the negative electrode described above. Specifically, the present invention includes a secondary battery including the negative electrode described above. The lithium secondary battery may include a positive electrode including a positive electrode current collector and a positive electrode active material layer positioned on at least one surface of the positive electrode current collector; the negative electrode described above; a separator interposed between the positive electrode and the negative electrode; and an electrolyte that conducts lithium ions. The positive electrode current collector, the negative electrode current collector, the positive electrode active material or composition of the positive electrode active material layer, the separator, and a solvent or an electrolyte salt of the electrolyte or the concentration of the electrolyte salt, etc., is sufficient as long as it is a material or composition commonly adopted in the lithium secondary battery.

(Example)

Each of Si, $SiO_2$, and MgO raw material was added to the powder mixer at a molar ratio of 6(Si):4.5($SiO_2$) : 1.5 (MgO) and homogeneously mixed to prepare a raw material.

26 kg of the raw material was placed in a crucible in a vacuum chamber of 0.1 torr or less, heated to 1,400°C to evaporate, and then condensed in a collecting plate at 400°C to obtain a magnesium-doped silicon oxide.

The obtained magnesium-doped silicon oxide was subjected to heat treatment at 900 °C for 15 hours in an Ar atmosphere to prepare a bulk-type negative electrode material for a secondary battery.

The prepared bulk-type negative electrode material for a secondary battery was mechanically pulverized to have an average particle diameter of 5 $\mu$m to prepare a particulate negative electrode material, and 5% by weight of carbon was coated on the resulting particulate negative electrode material through a CVD process at 850°C using a hydrocarbon gas to prepare a carbon-coated negative electrode material powder.

(Comparative Example 1)

Each of Si, SiO$_2$, and MgO raw material was added to the powder mixer at a molar ratio of 6(Si):4.5 (SiO$_2$):1.5 (MgO) and homogeneously mixed to prepare a raw material.

26 kg of the raw material was placed in a crucible in a vacuum chamber of 0.1 torr or less, heated to 1,400°C to evaporate, and then condensed in a collecting plate at 400°C to obtain a magnesium-doped silicon oxide. The obtained magnesium-doped silicon oxide (a bulk-type negative electrode material for a secondary battery) was mechanically pulverized to have an average particle diameter of 5 μm to prepare a particulate negative electrode material, and 5% by weight of carbon was coated on the resulting particulate negative electrode material through a CVD process at 850°C using a hydrocarbon gas to prepare a carbon-coated negative electrode material powder.

(Comparative Example 2)

24 kg of a mixed raw material of Si and SiO$_2$ was placed in crucible A and 2 kg of a metal Mg lump was placed in crucible B, crucible A was heated to 1,500°C and crucible B was heated to 900°C, respectively, to evaporate, and then condensed in a collecting plate at 900°C to obtain a magnesium-doped silicon oxide.

The obtained magnesium-doped silicon oxide (a bulk-type negative electrode material for a secondary battery) was mechanically pulverized to have an average particle diameter of 5 μm to prepare a particulate negative electrode material, and 5% by weight of carbon was coated on the resulting particulate negative electrode material through a CVD process at 850°C using a hydrocarbon gas to prepare a carbon-coated negative electrode material powder.

- Experimental Example

• Mg content deviation

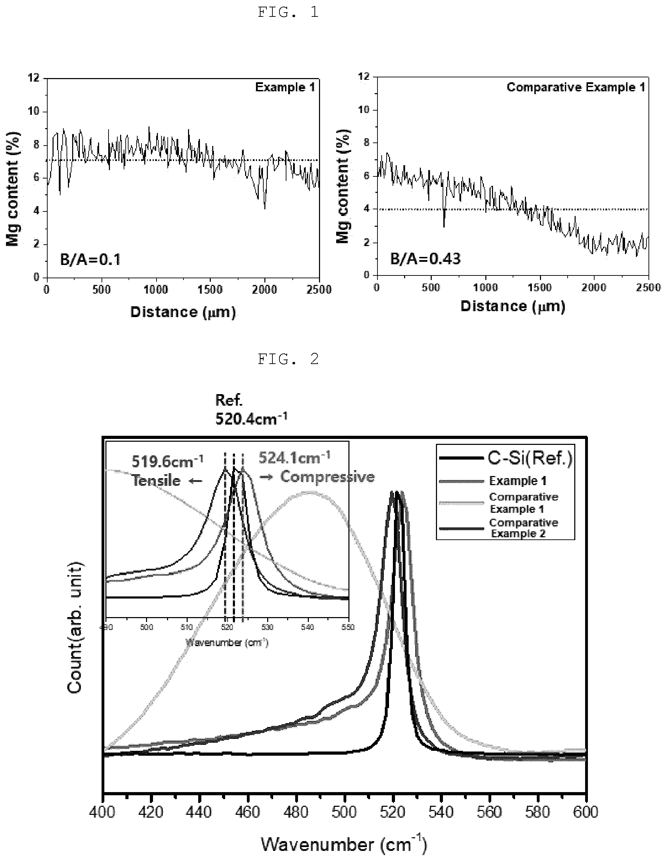

B/A was calculated, in which A was average content (wt%) of the doping element calculated from values measured at any 100 points in the linear composition across the center of the cross section through electron disperse spectroscopy (EDS) based on a cross section across a center of a magnesium-doped silicon oxide before pulverizing (Comparative Example 2) or a bulk-type negative electrode material for a secondary battery obtained by heat treatment (Example), and B was a standard deviation of the contents. The results thereof are shown in FIG. 1. As a result of composition analysis, B/A of the negative electrode material sample prepared in Example was 0.1, and B/A of the negative electrode material sample prepared in Comparative Example 2 was 0.43.

• Raman analysis

Raman analysis was performed under the following conditions by analyzing the negative electrode material after pulverizing with μ-Raman (equipment name: XperRam C, Nanobase, Inc., Korea), based on the Raman signal of silicon. The Raman signal of the negative electrode material powder is shown in FIG. 2. As shown in FIG. 2, it can be seen that the wavenumber of silicon Raman signal of the negative electrode material prepared in Example was 523.6 cm$^{-1}$, and the negative electrode material has residual compressive stress, and the negative electrode materials prepared in Comparative Examples have residual tensile stress. In addition, as a result of measuring the FWHM of the Raman signal of the silicon prepared in the Example, it was confirmed that the FWHM was 12 cm$^{-1}$, which was greater than the FWHM of the Raman signal (C-Si(ref) in the drawing) of the single-crystal silicon.

Analysis conditions: Excitation laser wavelength = 532 nm, laser power = 0.5 mW, spectrometer resolution 1 cm$^{-1}$, powdery negative electrode material = 1 g, detector exposure time = 15 s

The stress remaining in the silicon was calculated using the Raman measurement result and the following Equation, and silicon residual stress in the particulate negative electrode material, and silicon residual stress in the bulk-type negative electrode material are summarized in Table 1. As summarized together with the results of the comparative examples in Table 1, it can be seen that in the case of the negative electrode material prepared in Example, the silicon in the bulk-type had a residual compressive stress of 0.7 GPa and the silicon in the form of the particulate had a residual compressive stress of 0.25 GPa; and Si in the amorphous phase in the case of Comparative Example 1 and Si in Comparative Example 2 had tensile stress, not compressive stress.

$$\sigma(MPa) = -500 \times \triangle\omega(cm^{-1})$$

wherein σ is residual stress, Δω is a difference between the Raman signal of the measured sample and the Raman signal of the single-crystal silicon (C-Si(ref) in the drawing), 520.4 cm$^{-1}$) (=the measured wavenumber of Raman signal of silicon - the wavenumber of Raman signal of single-crystal silicon), if $\sigma$ is positive, it is compressive stress, and if $\sigma$ is negative, it is tensile stress.

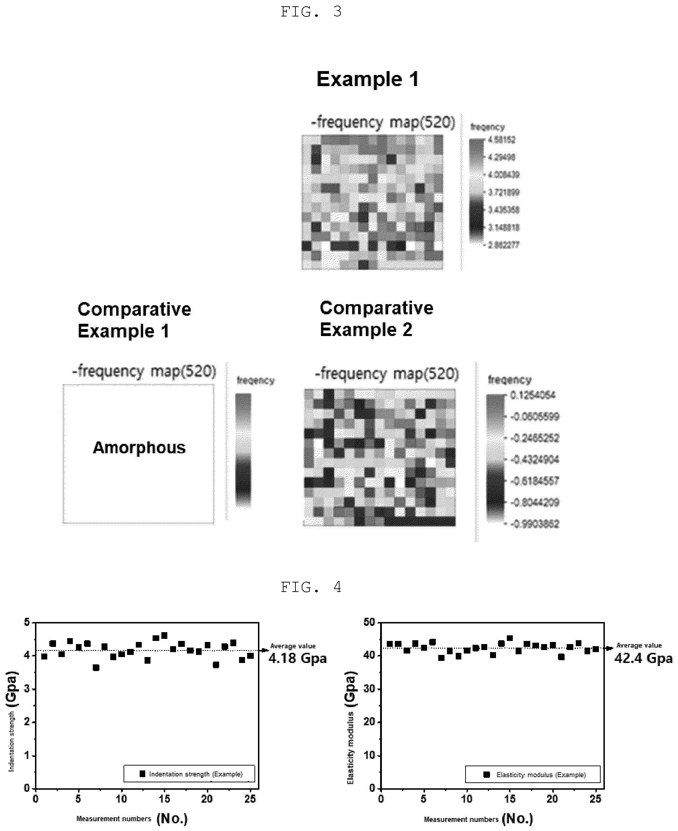

A two-dimensional mapping analysis based on the Raman signal of silicon was performed under the following conditions by analyzing a magnesium-doped silicon oxide before pulverizing (Comparative Example) or a bulk-type negative electrode material for a secondary battery obtained by heat treatment (Example) with $\mu$-Raman analysis (equipment name: XperRam C, Nanobase, Inc., Korea), and the results of mapping are shown in FIG. 3. In the case of the negative electrode material prepared in Example, it was confirmed that the silicon Raman peak was detected from all pixels, and as a result of measuring the shift for each pixel = WNi(Si)-WN(ref), the range of the shift was 2.86 (minimum value) to 4.58 (maximum value).

Mapping conditions: excitation laser wavelength = 532 nm, laser power = 0.1 mW, detector exposure time (exposure time per unit analysis area) = 1 sec, focal length = 30 mm, grating = 1,800 grooves/mm, pixel resolution = 1 cm$^{-1}$, mapping size = 14 $\mu$m x 14 $\mu$m

• Mechanical properties

For measurement of particle strength and particle expansion, compressive strength was measured using a micro-compression tester MCT-W manufactured by Shimadzu Corporation. Particle strength was measured for any 10 particles having a diameter of 10 $\mu$m, and the results of the measurements are summarized in Table 1.

The micro-compression tester continuously applies a force to the particles, and at this time, the pressure at which the particles break is defined as the particle strength, which is automatically measured.

The test was performed using a nanoindentation test apparatus (Anton Paar, Austria) on the cross section of a magnesium-doped silicon oxide before pulverizing (Comparative Example 1) or a bulk-type negative electrode material for a secondary battery obtained by heat treatment (Example). The nano-indentation test (indenter) followed the measurement standard of ISO 14577-1 E, and the measurement thereof were carried out under the condition of a maximum load of 50 mN and a load application speed of 100 mN/min, assuming a Poisson ratio of 0.3 using a Berkovich indenter. In this case, the nano-indentation test was performed in a matrix form of 5 x 5 to 25 x 25, with a spaced distance between the indentation marks of at least 10 um or more based on the indentation marks by the indenter. The strength and modulus of elasticitycalculated thorough the nano-indentation test are shown in FIG. 4.

• Manufacture of battery

The final negative electrode material powder was used as an active material, and the active material:conductive material (carbon black):carboxymethyl cellulose (CMC):styrene butadiene rubber (SBR) was mixed at a weight ratio of 8:1:0.5:0.5, coated on a copper foil having a thickness of 17 $\mu$m, and dried at 90°C for 40 minutes. After the drying, the obtained product was punched at a diameter of 14 mm, a metal lithium having a diameter of 16 mm was used as a counter electrode, a separator having a diameter of 18 mm was interposed, and an electrolyte was filled with between the electrodes to manufacture a CR2032 coin-type half cell. In the electrolyte solution, 1 M LiPF$_6$ was dissolved in a solvent in which ethylene carbonate(EC)/diethyl carbonate (DEC) was mixed at a volume ratio of 1:1, and 3 wt% of fluoroethylene carbonate (FEC) was used as an additive. The formation process was performed by charging (lithiation) the manufactured battery up to 0.005 V at a constant current of 0.1 C, charging the battery at a constant voltage of 0.005 V until 0.01 C is reached, and then discharging (de-lithiation) the battery up to 1.5 V at a constant current of 0.1 C (first formation step); and again, by charging (lithiation) the battery up to 0.005 V at a constant current of 0.1 C, charging the battery at a constant voltage of 0.005 V until 0.01 C is reached, and then discharging (de-lithiation) the battery up to 1.0 V at a constant current of 0.1 C (second formation step).

• Battery performance evaluation

Charging and discharging cycle conditions: charging (lithiation) the battery up to 0.005 V at a constant current of 0.5 C, charging the battery at a constant voltage of 0.005 V until 0.05 C is reached, and then discharging (de-lithiation) the battery up to 1.0 V at a constant current of 0.5 C.

Number of charging and discharging cycles: 50 times

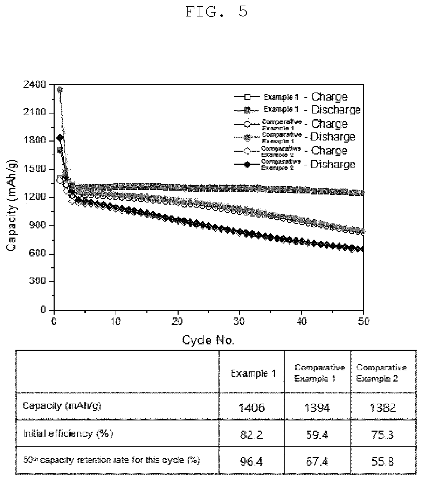

The discharge capacity of the first charging and discharging cycle is summarized in Table 1 as capacity, an initial efficiency based on charging and discharging in the first formation step, a capacity retention rate of C50/C1*100 are also summarized in Table 1, and a graph showing the charging and discharging capacity according to the first formation step, the second formation step, and the charging and discharging cycle is shown in FIG. 5.

[Table 1]

|  | Example 1 | Comp. Example 1 | Comp. Example 2 |
|---|---|---|---|
| Mg average content (A) (%) | 7.1 | 7.2 | 4.0 |
| Standard deviation (B) | 0.78 | 0.81 | 1.71 |
| Bulk compressive stress (GPa) | 0.7 | Amorphous | -0.4 |
| Powder compressive stress (GPa) | 0.25 | Amorphous | -0.9 |
| Particle compressive strength (GPa) | 0.164 | 0.116 | 0.096 |
| Capacity (mAh/g) | 1,406 | 1,394 | 1,382 |
| Initial efficiency (%) | 82.2 | 59.4 | 75.3 |
| Capacity retention rate (%) | 96.4 | 67.4 | 55.8 |

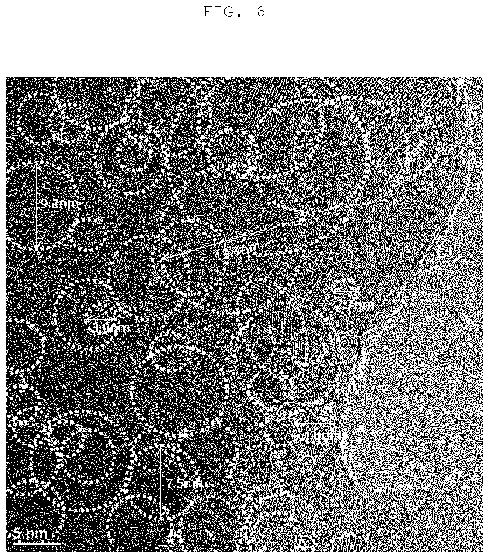

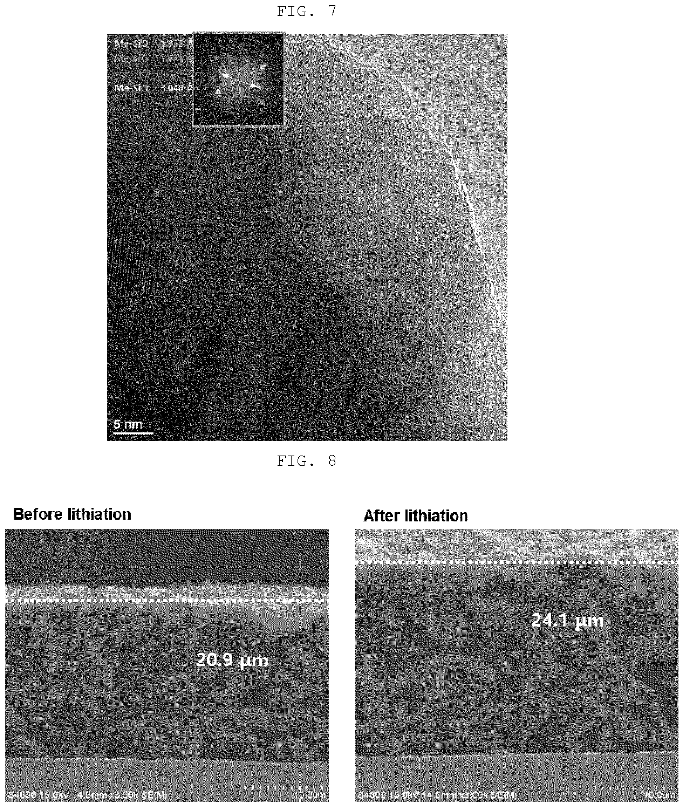

FIG. 6 is a high-magnification transmission electron microscope photograph obtained by observing the negative electrode material prepared in Example. It can be seen from FIG. 6 that the average diameter of the crystalline silicon nanoparticles was about 6.7 nm. FIG. 7 illustrates both a high-magnification transmission electron microscope photograph obtained by observing the matrix and a selected area diffraction pattern (SADP) of the area indicated by the yellow circle inserted at the top of the .high-magnification transmission electron microscope photograph. From a result of analyzing HR-TEM and SADP of FIGS. 6 and 7, it was confirmed that the matrix contained crystalline magnesium silicate, and the silicon nanoparticles formed a coherent interface with the crystalline magnesium silicate.

FIG. 8 is a scanning electron microscope photograph obtained by observing a cross-section and thickness of the negative electrode before lithiation, and a scanning electron microscope photograph of a cross-section and thickness of the negative electrode after lithiation at 0.005 V, in a third charging and discharging cycle (a first charging and discharging cycle in a life evaluation step). It was confirmed that a volume expansion rate caused by the change in the thickness before and after lithiation was only 15%.

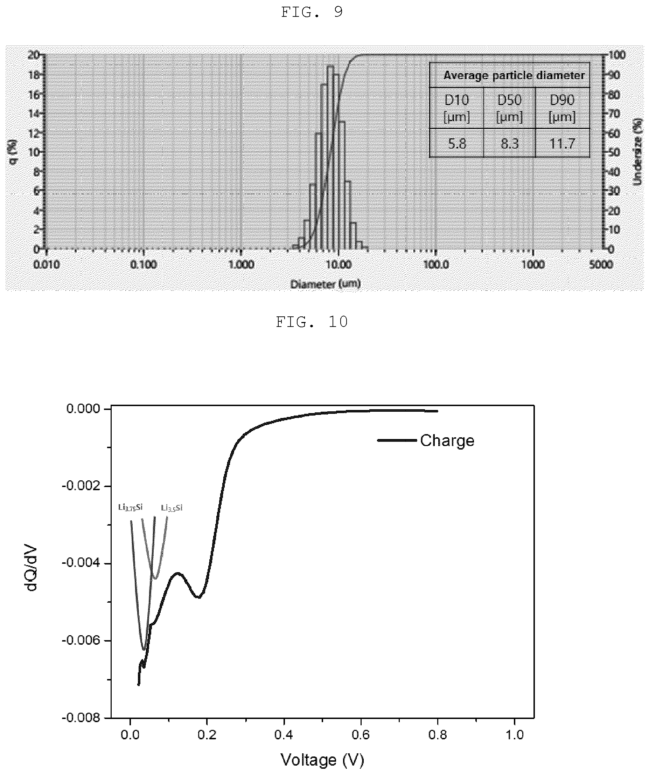

FIG. 9 is a diagram illustrating a result obtained by measuring the particle size distribution of the pulverized and carbon-coated negative electrode material powder. It can be seen from FIG. 9 that the average particle diameter (D50) was 8.3 $\mu$m.

FIG. 10 is a diagram illustrating a dQ/dV graph in the first charging and discharging cycle. It can be seen from FIG. 10 that there was a lithium insertion peak corresponding to the $Li_{3.75}Si$ reaction. It can be seen from this that when the negative electrode material prepared in Example was lithiated, the lithiation was performed at an alloying ratio of 3.75 mol lithium per 1 mol of silicon.

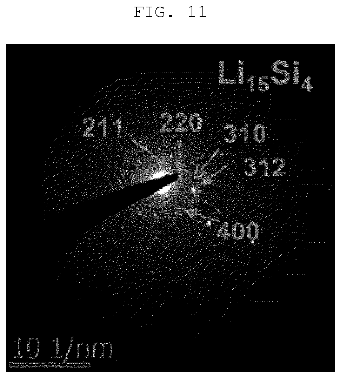

FIG. 11 is a diagram illustrating a selected area diffraction pattern (SADP) in which only lithiated silicon nanoparticles are selectively analyzed by observing the negative electrode material charged up to 0.005 V in the first charging and discharging cycle with a transmission electron microscope. It can be directly confirmed from FIG. 11 that the $Li_{3.75}Si$ reaction occurred during charging, which is consistent with the dQ/dV graph result of FIG. 10.

The negative electrode material for a secondary battery according to the present invention contains a matrix containing a silicon oxide, a complex oxide of one or more doping elements selected from the group consisting of an alkali metal, an alkaline earth metal and a post-transition metal, and silicon, or a mixture thereof; and nanoparticle silicon dispersed and impregnated in the matrix and having residual compressive stress, and thus has improved mechanical properties and electrochemical properties, and in particular, high discharge capacity and capacity retention rate at a level capable of actually commercializing a secondary battery including a silicon-based negative electrode material.

Hereinabove, although the present invention has been described by specific matters, the limited embodiments and drawings, they have been provided only for assisting in a more general understanding of the present invention. Therefore, the present invention is not limited to the exemplary embodiments. Various modifications and changes may be made by those skilled in the art to which the present invention pertains from this description.

Therefore, the spirit of the present invention should not be limited to the above-mentioned embodiments, but the claims and all of the modifications equal or equivalent to the claims are intended to fall within the scope and spirit of the present invention.

**Claims**

1. A negative electrode material for a secondary battery, comprising: a matrix containing a silicon oxide, a complex oxide of one or more doping elements selected from the group consisting of an alkali metal, an alkaline earth metal and a post-transition metal, and silicon, or a mixture thereof; and silicon nanoparticles dispersed and impregnated in the matrix, wherein the negative electrode material for a secondary battery satisfies the following Equation 1:

$$[\text{Equation 1}]$$

$$1 < WN(Si)/WN(ref)$$

wherein WN(ref) is a central wavenumber of a Raman peak of bulk single-crystal silicon, and WN(Si) is a central wavenumber of a Raman peak of nanoparticulate silicon contained in the negative electrode material.

2. The negative electrode material of claim 1, wherein a difference between the WN(Si) and the WN(ref) is 0.1 $cm^{-1}$ or more.

3. The negative electrode material of claim 1, wherein a full width at half maximum (FWHM) of the Raman peak of the nanoparticulate silicon contained in the negative electrode material is greater than that of the bulk single-crystal silicon.

4. The negative electrode material of claim 1, wherein a full width at half maximum (FWHM) of the Raman peak of the nanoparticulate silicon contained in the negative electrode material is 4 to 20 $cm^{-1}$.

5. The negative electrode material of claim 1, wherein a difference between a maximum value and a minimum value in a shift defined by the following Equation 2 is 5 $cm^{-1}$ or less under the following mapping conditions, during a two-dimensional mapping analysis based on a Raman signal of the silicon:

mapping conditions: excitation laser wavelength = 532 nm, laser power = 0.1 mW, detector exposure time (exposure time per unit analysis area) = 1 sec, focal length = 30 mm, grating = 1800 grooves/mm, pixel resolution = 1 $cm^{-1}$, mapping size = 14 $\mu$m x 14 $\mu$m

$$[\text{Equation 2}]$$

$$Shift = WN^i(Si) - WN(ref)$$

wherein WN(ref) is the same as in Equation 1 above, and WNi(Si) is the central wavenumber of the Raman peak of the nanoparticulate silicon contained in the negative electrode material in one pixel, which is a unit analysis area, during the mapping analysis.

6. The negative electrode material of any one of claims 1 to 5, wherein the silicon nanoparticles have an average diameter of 2 to 30 nm.

7. The negative electrode material of any one of claims 1 to 5, wherein an interface between the silicon nanoparticles and the matrix is a coherent interface.

8. The negative electrode material of any one of claims 1 to 5, wherein the doping element is one or more selected from the group consisting of lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi).

9. The negative electrode material of any one of claims 1 to 5, wherein the composite oxide includes a crystalline phase.

10. The negative electrode material of any one of claims 1 to 5, wherein the negative electrode material is a particulate having an average diameter of $10^0$ $\mu$m to $10^1$ pm.

11. The negative electrode material of any one of claims 1 to 5, further comprising a coating layer containing carbon.

12. A negative electrode comprising the negative electrode material for a secondary battery of any one of claims 1 to 5.

**13.** A secondary battery comprising the negative electrode of claim 12.

FIG. 1

FIG. 2

FIG. 3

## Example 1

-frequency map(520)

frequency
4.58152
4.29498
4.008439
3.721899
3.436358
3.148818
2.862277

## Comparative Example 1

-frequency map(520)

frequency

**Amorphous**

## Comparative Example 2

-frequency map(520)

frequency
0.1254054
-0.0605599
-0.2465252
-0.4324904
-0.6184557
-0.8044209
-0.9903862

FIG. 4

Average value
**4.18 Gpa**

Average value
**42.4 Gpa**

FIG. 5

| | Example 1 | Comparative Example 1 | Comparative Example 2 |
|---|---|---|---|
| Capacity (mAh/g) | 1406 | 1394 | 1382 |
| Initial efficiency (%) | 82.2 | 59.4 | 75.3 |
| 50th capacity retention rate for this cycle (%) | 96.4 | 67.4 | 55.8 |

FIG. 6

FIG. 7

FIG. 8

**Before lithiation**

**After lithiation**

FIG. 9

FIG. 10

FIG. 11

Europäisches
Patentamt

European
Patent Office

Office européen
des brevets

# EUROPEAN SEARCH REPORT

Application Number

EP 20 21 3402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoParticleCharacterization(2)_1962085150.pdf [retrieved on 2021-05-04] * paragraph [0014] * | 6,10 | INV. H01M4/131 H01M4/134 H01M4/36 H01M4/38 H01M4/48 H01M4/485 H01M4/62 H01M10/0525 H01M4/02 |
| X | KR 2020 0100252 A (DAE JOO ELECTRONIC MAT CO LTD [KR]) 26 August 2020 (2020-08-26) * paragraphs [0094] - [0097], [0152]; claims 7, 18, 21; figures 3-16 * | 1-13 | |
| A | US 2016/164076 A1 (ESSAKI KENJI [JP] ET AL) 9 June 2016 (2016-06-09) * claims 1-2; figure 2 * | 1-13 | |
| A | VRANKOVIC D ET AL: "Novel 3D Si/C/SiOC nanocomposites: Toward electrochemically stable lithium storage in silicon", SOLID STATE IONICS, vol. 302, 12 November 2016 (2016-11-12), pages 66-71, XP029942690, ISSN: 0167-2738, DOI: 10.1016/J.SSI.2016.11.009 * Abstract, 3.2 Raman spectroscopy measurement * | 1-13 | TECHNICAL FIELDS SEARCHED (IPC) H01M |

-/--

The present search report has been drawn up for all claims

| Place of search | Date of completion of the search | Examiner |
|---|---|---|
| Munich | 4 May 2021 | Letilly, Marika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 21 3402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KONCHITS A A ET AL: "Structure and electronic properties of biomorphic carbon matrices and SiC ceramics prepared on their basis", JOURNAL OF APPLIED PHYSICS, AMERICAN INSTITUTE OF PHYSICS, US, vol. 124, no. 13, 5 October 2018 (2018-10-05), XP012232107, ISSN: 0021-8979, DOI: 10.1063/1.5042844 [retrieved on 2018-10-05] * B. Raman scattering; example 9 * | 1-13 | |

|  |  | TECHNICAL FIELDS SEARCHED (IPC) |
|---|---|---|

The present search report has been drawn up for all claims

| Place of search | Date of completion of the search | Examiner |
|---|---|---|
| Munich | 4 May 2021 | Letilly, Marika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 21 3402

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2021

| Patent document cited in search report | | Publication date | Patent family member(s) | | Publication date |
|---|---|---|---|---|---|
| KR 20200100252 | A | 26-08-2020 | NONE | | |
| US 2016164076 | A1 | 09-06-2016 | CN | 105680006 A | 15-06-2016 |
| | | | EP | 3029760 A1 | 08-06-2016 |
| | | | JP | 6438287 B2 | 12-12-2018 |
| | | | JP | 2016110834 A | 20-06-2016 |
| | | | US | 2016164076 A1 | 09-06-2016 |

EPO FORM P0459

For more details about this annex : see Official Journal of the European Patent Office, No. 12/82

**EP 3 993 092 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200143237
- KR 1020200065514
- KR 1020150045336